# EUROPEAN PATENT APPLICATION

(11) **EP 2 081 123 A1**
(43) Date of publication of application: **22.07.2009**
(21) Application number: 09250120.4
(22) Date of filing: 19.01.2009
(51) Int. Cl.: G06F 17/30

(54) **System, method and product for processing utility data**

(30) Priority: 20.01.2008 US 22347 P; 14.01.2009 US 353850
(71) Applicant: Current Communications Services, LLC, Germantown, MD 20874 (US)
(72) Inventor: Brancaccio, Daniel S., Coronado, CA 92118 (US); Kreiss, David G., San Diego, CA 92130 (US)
(74) Representative: Tunstall, Christopher Stephen

(57) **Abstract**

A system, method and computer program product for providing data from a plurality of physically separate databases storing utility data to a plurality of software applications is provided. In one embodiment, the computer system comprises a first set of adaptors for accessing a plurality of measurement databases that store measurement data supplied via a plurality of nodes and derived from measurements of a plurality of parameters of a power grid, a second set of adaptors configured to access one or more databases that store property data comprising data of the plurality of network nodes, a third set of adaptors configured to access one or more connectivity databases that store connectivity data comprising the connectivity of the plurality of nodes, a node map stored in a memory that includes data sufficient for associating each of the plurality of nodes with at least one of the plurality of separate databases, and a data interface responsive to requests from the plurality of software applications and configured to identify one or more of the adaptors to which to provide data requests based on the node map.

## Description

### Cross Reference to Related Applications

This application claims the benefit of U.S. Provisional Application No. 61/022,347, filed January 20, 2008, entitled "System, Method, and Product for Processing Utility Data", which is incorporated herein by reference in its entirety for all purposes.

### Field of the Invention

The present invention generally relates to utility data systems and methods, and more particularly to systems, methods and computer program products for integrating and managing utility data.

### Background of the Invention

Utility companies, such as power utility companies, collect various data relating to the delivery of utility services to customers. Such data may include consumer demographic data, power parameter measurement data, infrastructure configuration data, topology data and other data. Such data may be processed for various purposes, such as for billing, purchasing energy on the grid, distribution, performance optimization, infrastructure repair, and maintenance. Typically, utility companies are organized into various autonomous departments. In particular, the various departments have separate information technology (IT) systems for data storage and analysis operations. The result is these 'silo' IT systems operate as islands of data that generally are not accessible by other departments. Accordingly, there is a need to integrate these islands of data so that all the data may be accessed by any software application (of other departments or third parties) as desired by the utility. There is also a need to expose data and information across all IT systems to allow analytics, reports, alarms and notifications of an IT system to be exposed to all other IT systems of the utility.

In addition, it is highly desirable that utilities operate efficiently. To do so, utilities need increased monitoring and control of the utility infrastructure, which may require transparent access to any and all of the raw utility data by third party applications and other departments. This can be especially challenging when waveform and complex data as well as metadata, such as asset information and network connectivity data is required. Accordingly, there is a need for various IT sources to interface with raw data sources. Further, with many departments having many systems for performing their functions, there is a need to integrate many different systems requesting access to utility-related data.

These and other needs may be addressed by one or more embodiments of the present invention.

### Summary of the Invention

The present invention provides a system, method system, method and computer program product for providing data from a plurality of physically separate databases storing utility data to a plurality of software applications. In one embodiment, the computer system comprises a first set of adaptors for accessing a plurality of measurement databases that store measurement data supplied via a plurality of nodes and derived from measurements of a plurality of parameters of a power grid, a second set of adaptors configured to access one or more databases that store property data comprising data of the plurality of network nodes, a third set of adaptors configured to access one or more connectivity databases that store connectivity data comprising the connectivity of the plurality of nodes, a node map stored in a memory that includes data sufficient for associating each of the plurality of nodes with at least one of the plurality of separate databases, and a data interface responsive to requests from the plurality of software applications and configured to identify one or more of the adaptors to which to provide data requests based on the node map. At least some of the data stored by the plurality of measurement databases may comprise denormalized data. At least some adaptors of the first set of adaptors may be configured to renormalize denormalized data.

The invention will be better understood by reference to the following detailed description taken in conjunction with the accompanying drawings.

### Brief Description of the Drawings

The invention is further described in the detailed description that follows, by reference to the noted drawings by way of non-limiting illustrative embodiments of the invention, in which like reference numerals represent similar parts throughout the drawings. As should be understood, however, the invention is not limited to the precise arrangements and instrumentalities shown. In the drawings:

Figure 1 is a block diagram of an example utility data integration system, in accordance with an example embodiment of the present invention;

Figure 2 is a block diagram of another example utility data integration system, in accordance with an example embodiment of the present invention; and

Figure 3 is a flow chart of a method for integrating utility data, in accordance with an example embodiment of the present invention.

### Detailed Description of Illustrative Embodiments

In the following description, for purposes of explanation and not limitation, specific details are set forth, such as particular networks, communication systems, computers, terminals, devices, components, techniques, data and network protocols, power line communication systems (PLCSs), software products and systems, enterprise applications, operating systems, development interfaces, hardware, etc. in order to provide a thorough understanding of the present invention.

However, it will be apparent to one skilled in the art that the present invention may be practiced in other embodiments that depart from these specific details. Detailed descriptions of well-known networks, communication systems, computers, terminals, devices, components, techniques, data and network protocols, software products and systems, operating systems, development interfaces, and hardware are omitted so as not to obscure the description of the present invention.

The utilities are often structured into a plurality of departments (system protection, substation maintenance, distribution engineering, planning, power quality, operations, etc). Each department typically is independent and has its own IT (Information Technology) systems where they own the measurement device, data collection software, database and the analytic tools. Usually, the third party supplier of the measurement device provides their proprietary software. The result is that a utility often has a large collection of databases that are not exposed to other departments of the utility. These are, in essence, "islands of data" or "silo systems".

Examples of the present invention provide a single logical repository for all (or most) of the data used by an electric utility (the repository referred to herein as a data mart). The data mart includes a plurality of physical separate databases some of which may be physically remote from each other. The data of these databases is typically collected and/or maintained by separate departments of the electric utility and in some instances, by one or more third parties. As discussed, only the department of the utility collecting and maintaining the data typically has access to its associated data. In embodiments of the present invention, access to the utility data by other departments and/or third parties may be provided via a Utility Data Integration System (UDIS). The UDIS facilitates controlled integration of, and access to, data of the data mart (and in some embodiments, localized processing of that data) by various departments within the utility and by third parties, all of which typically would not otherwise have such access.

In one example, a plurality of IT systems (such as those corresponding to different utility departments) house diverse utility data such as data related to asset management, work management, Supervisory Control and Data Acquisition (SCADA), GIS, substation automation, data management system (DMS) and/or other departmental systems of one or more utility companies. Such data may be integrated in accordance with the present invention to form a data mart. Each IT system may be configured to respond to a collection of commands received via the Utility Data Integration System from other IT systems. For example, a first IT system (of a first department or remote third party entity) may invoke a command in a second (different) IT system. This command may be as simple as "read data" such as a request for voltage and current data (waveform or RMS) which the first IT system uses to compute the power factor or power. Alternately, the command may be more complex such as a command to run an analytical algorithm (resident on the second IT system) such as a command to compute (and return) the power and/or power factor. Such invoking may comprise actually passing the command but a preferred method may be to pass data or a "flag" to the receiving IT system. However, the preferred method requires the secondary IT system have an interface that recognizes the data and/or flags. (there may be a difference as stated here.

In some embodiments, the UDIS may include, or provide access to, applications that are reused by a multitude of the IT systems. Thus, instead of creating the same application for different IT systems, the UDIS provides access to the application for many IT systems. In summary, the architecture of the UDIS supports four unique interface services that perform four tasks: (1) Data Interface Service (e.g., collecting data), (2) Analysis Interface Service (e.g., analyzing data), (3) Notification and Reporting Interface Service (e.g., generating alarms and reports), and (4) Control Interface Service (e.g., controlling equipment).

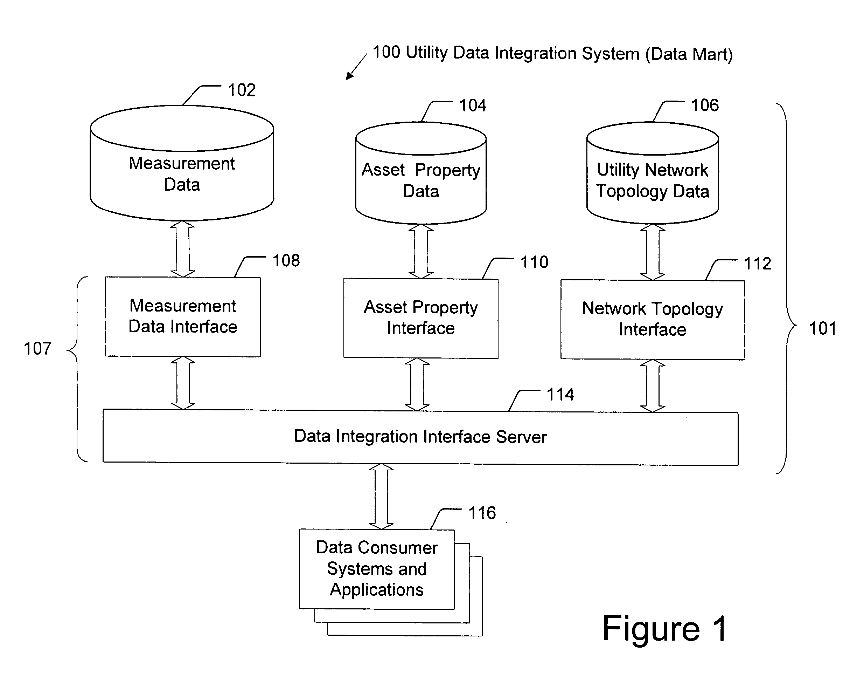

Figure 1 depicts a high level schematic of an example embodiment of utility data integration system 100 configured to facilitate a plurality of applications 116 accessing data (i.e., requesting the data or requesting data derived from processing of the data) of the data mart 101 (databases 102, 104, 106).

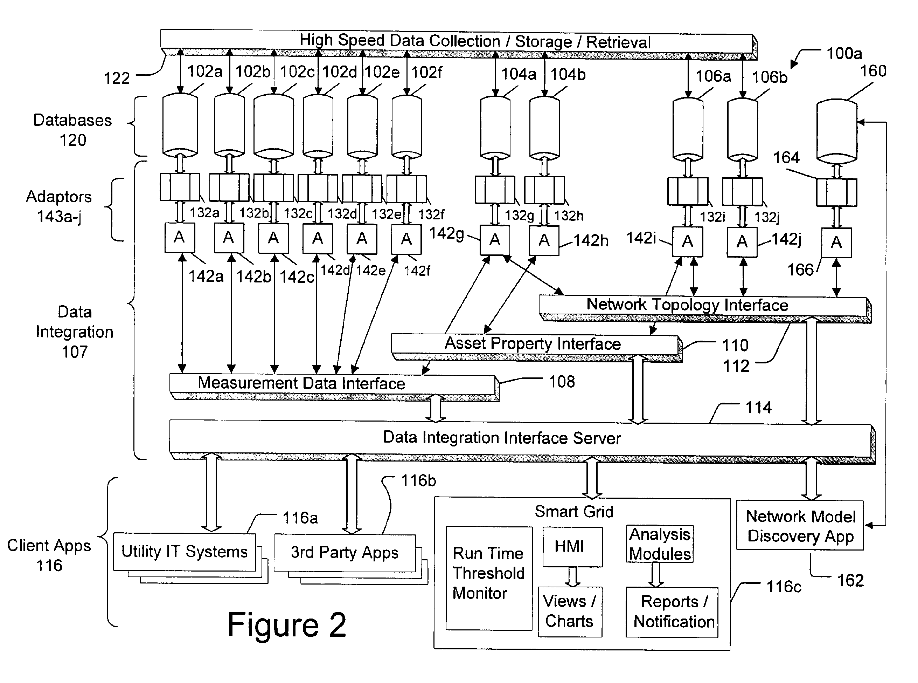

The system 100 may include three or more architectural layers. A first layer may comprise the databases 102, 104, 106 of utility company data forming a portion of the data mart. Another layer may include various applications 116 being run by the IT systems of the various respective utility company departments. This application layer also may include applications of third parties that allow them (and others) to access all or some or the utility data. The departments and third parties accessing the utility data are referred to herein as consumers. Between the first layer and application layer is another portion of the datamart referred to as a data integration layer 107 providing various adaptors 143 and interfaces 108-114 that may generate or respond to requests for data. In some embodiments a fourth layer also may be present (see Figure 2) which includes the systems and applications for collecting utility data from the field (e.g., the power distribution network) and for storing such data in one or more databases.

The many applications being served by the Utility Data Integration System (UDIS) 100 may perform various types of utility data processing. Three categories of data may be accessed via the UDIS for such processing. One category includes the utility measurement data 102, which includes data from measurements of one or more of the plurality of utility parameters at various locations in the power distribution system. For example, this data may include low voltage power line and medium voltage power line (a) voltage data (RMS and waveform), (b) current data (RMS and waveform), (c) harmonics waveform data, (d) power data, (e) power factor data, (e) power line impedance data, etc.

Another category of data is asset property data 104. The assets, in the case of a power utility, may comprise transformers, sensing devices, switches, reclosers, capacitor banks, breakers, relays, utility poles, meters, bushings, communication devices and other equipment which form part of a power distribution system (including its associated communication system). The utility asset property data includes identifying and other information about the asset (e.g., properties). For example, a transformer's property data may include, among other properties, the transformer's power rating, rated efficiency, location, date of installation, and date of last service. In some instances, the asset may contain its own measurement capability (e.g. a Schweitzer relay). In other cases, the measurement device may be physically attached to the asset (e.g. Micom M871). In the case where the measurement device is a separate (attached or co-located) piece of equipment, the measurement device and its properties also may be stored in an asset property data database although its connectivity (other than to the asset with which it is co-located) need not be part of the utility network topology data.

The third data category is the utility network topology data 106. A utility system may be considered a network of nodes (e.g., assets) that are interconnected and from which data is collected. The network topology data includes information related to the connectivity of the network nodes. In other words, network topology refers to the connectivity of the various devices within the utility network. Identifying information concerning one or more network topologies may be stored for the one or more utility companies. In various embodiments, a node within a network's topology may be a consumer's utility meter, a distribution transformer, a power line communication device serving a neighborhood, a switch, or a backhaul device serving a portion of the power grid. The network topology data may include connectivity data for such nodes such as the siblings, parent, or children for a given node and may also include spatial information. Such a hierarchical structure is only one example of such data and various embodiments may include other schemes for the network topology data. It is worth noting that a single database may include one, two or all three categories of data and network topology data may exist in more than one database, so that, in some systems, the only way to access the complete topology is through the data mart.

By allowing access to the raw measurement data, the properties of the asset to which the measurement data pertains, and the location of the asset within the network topology, extensive processing and analysis may be performed for various purposes.

The data sources 102-106 may be accessed by various clients applications 116 via the interface layer 107, which, in essence, hides the complexity of the underlying data and presents the data to the clients in uniform manner. This architecture allows a utility to consolidate separate islands of data into a single data warehouse (the data mart) that can be used across a plurality (all) departments. The data mart is the "logical" repository of all utility data to be used by the utility as well as client applications. Being a "logical" single repository, the data mart may consist of a number of physical databases including both the utility's database as well as other utility's databases and including a utility's SCADA historian and asset databases. As discussed, these databases may be physically separate and distributed and also maintained and controlled by separate IT systems.

Data models can generally be categorized as one of two types; the physical data model and the logical data model. Data models are independent of the actual database. Data consumers that use data based of the data model often will have no knowledge about the data persistence mechanism (how the data is stored). For example, it could be stored via Microsoft SQL, MySQL, Oracle, or any number of proprietary database systems. A data model may also define the schema and/or record layout within the database.

A physical data model is primarily used to define the actual structure of the data. This structure eventually determines the schema or layout of data in a database. In many systems this physical data model is sufficient and applications can be developed that operate directly against the physical data model.

A logical data model is an abstraction of the physical data model. The abstraction does not have to have knowledge of the actual structure of the data in the physical data model. In some cases a logical model is unnecessary. For example, a logical data model is unnecessary if a database simply needed to store employee records and the data for each employee was name, social security number, and start date.

In summary, the physical data model can be considered the actual layout of the data at the record and table level (schema) of how the data is stored. The logical data model is the abstract or generic description of the data at the entity level and how it maps to the problem domain. The problem domain in embodiments of the present invention comprises the physical electrical system. Once data (e.g., measurement, property, connectivity) is mapped to the physical point in the system it then becomes usable and an application can, for example, then "ask" a transformer for its load data, dissolved gas data and fault data regardless of the devices that made the measurements. An API (Application Programming Interface) includes specific rules and specifications (conventions) that define an abstraction of the underlying data and services available to application developers. The software implementation of the API 142 may be a set of functions, procedures, methods, classes, protocols, etc. that an operation system, library, or service (i.e., the UDIS in this embodiment) provides to support requests made by the applications. The API is defined at a higher level, rather than an explicit low level description of how data is laid out in the database. Drivers 132 are provided to allow the APIs 142 to interact with the various databases that form the datamart.

A database adapter (e.g., the driver portion) accesses proprietary (sometimes denormalized) data and converts it to the abstract (normalized, if necessary) format such as a format published in an interface specification. For example, an API 142 may be designed to support requests for five minute bucketed energy data. An application may request that data for a particular measurement point (such as, for example, a pole top distribution transformer) for a given time data range. The "best" data may be stored as meter accumulated energy pulses. The driver 132 would access the accumulated pulses for the date time range specified and convert that data to five minute bucketed energy data, then make it available using the API 142. Thus, the adaptor 143 issues commands to the database (or associated IT system). Once the database sends data back to the driver 132, the driver 132 may provide the data to the API 142 to provide to the interface server 114.

In one embodiment, the data mart utilizes a logical data model. Arbitrarily complex applications can be developed against the abstract logical data model. As new data sources become available, only a database adaptor for the new data source need be developed to allow the applications to take advantage of the new data. While the API (implemented by the DIIS) does have to support new functions over time, this will be less frequent over time and far less frequent than providing a new drivers.

While the logical data model may make application development easier; the performance of the data access typically will not be as good as when using direct access to the raw data. For this reason the abstract data model need not be used when large quantities of data need to be moved into or out of the database in a short period of time (high bandwidth operations). The embodiments described herein, however, use a logical data model.

In an example embodiment, a utility data holder may provide the UDIS as a service to various clients. Consider the example where a third party maintains the UDIS for clients including one or more utility companies. Consider also that the utility data sources of the utility companies form the data mart. In particular, the data integration system embodying the data mart is integrated within a plurality of participating utilities' IT infrastructure. Thus, each utility may be both consumers of data from the disparate IT systems and suppliers of data to the participating utility companies. In an example embodiment, network model data from a first utility's demand management system (DMS) may be used for a second utility's application. Further, such second utility's application may supply alarms and analyses to the first utility's work management system.

Historically the extraction, transformation and load (ETL) process is one of the most complex and costly pieces of data integration during the development of any technology implementation. Often, when designers turn to the task of designing and deploying their ETL processes, the tendency is to look only at the raw data. However, quite often corporate information architecture is built upon a wide range of diverse and complex databases, purchased applications and custom developed solutions. Systems integration is an extremely difficult job, ensuring all these disparate repositories are up to date and synchronized in terms of the data, structures and metadata. The primary focus of applications developed to address this problem is data conversion, for example, merging all the different data into a single repository.

Most data is stored in a utility database in what is considered a denormalized state. The data may be split up based on optimizations of data storage and performance. A very simple example would be storing addresses where, instead of storing the state name (e.g., Maryland, Virginia, etc.) along with an address, a number between 1 and 50 is stored instead. To reconstruct the address (normalize it) the state name is looked up (retrieved) using the number.

Denormalization techniques can be very complex, they can also vary significantly from database to database even when the same data is being stored. Renormalization can be done in a number of ways.
1. Simply publish the schema which defines the Denormalization, data consumers then access the raw data and renormalize it how they see fit.
2. Publish queries to be used to access the data where the queries renormalize the data. Data consumers simply include the queries in their applications.
3. Create stored procedures and views of the data, although this limits access to the data to only the procedures and views (no direct data access).
4. Develop Entity objects that represent the normalized data structures.
5. Develop an interface specification for all access to the underlying data.

The problem of renormalization is compounded when you have little or no control over the denormalization process such as, for example, when accessing data stored by a third party. In the list above, only the last two items are sufficiently abstracted from the underlying data structures to allow applications to be developed that have no intimate knowledge of the underlying denormalized data. Of those last two only the last allows fully independent development. Item four requires all development stay in sync as changes are made to the entity objects.

Various embodiments of the present invention employ an interface layer 107 designed to an interface specification for accessing the data of the logical data model and may have advantages over the other methods described above.

The integration layer 107 may provide various functions, including security functions and command processing. The security functions may be performed to verify that a given system (or user) requesting data is to be permitted access to specific utility data.

In furtherance of providing security, the controlling entity such as the owner of the data (e.g., a utility or UDIS provider) may create rules for controlling the access to and processing of data by various entities (e.g., applications, departments, third parties, etc.). Thus, the consumer seeking access to data via the UDIS 100 may do so in accordance with predetermined rules and, therefore, within the bounds and constraints provided by the owner of the data to thereby control the accessibility of data.

Further, the controlling entity (e.g., the utility owning the data or provider of the UDIS) may provide limitations and controls on the type of client that may access specific data. In one example embodiment, access to data may be limited by specific client (consumer), type of consumer, IT system, as a whole to all consumers, specific application, type of application, etc. In some embodiments multiple layers of security and control may be implemented: one by a controlling entity (e.g., the utility company as owner of the data) and one by another party (e.g., a party maintaining the data such as a department IT system). Access may be controlled based on any of the type of data, the quality of data, and the granularity of the data. Examples of different types of data include energy data, harmonic data, and power factor data. Quality of the data refers to the "properties of the data". For example a group may receive meter data but not have access to the name and address of the customer. As for granularity, a planning group may get fifteen minute average loading data but not the five second SCADA operational data. An advantage of such security is that for some embodiments, data may be stored at a third party data center and still remain under the control of the controlling entity (e.g., utility company). Privileges may be expanded or diminished, for example, according to pricing, licensing arrangements, and/or another business model.

As discussed, the data integration interface server may process commands. Command processing may include correlating a command or instruction from a given application 116 with one or more appropriate adaptors 143 for gathering data from among the three types of data referenced above. In a specific embodiment, the integration layer 107 may include a data integration interface server 114 which communicates with requesting applications from the IT systems of the various utility departments (or other data consumers). A measurement data interface 108, asset property interface 110, and network topology interface 112 may communicate with (or form the "back end" of) the data integration interface server 114. The measurement data interface 108 may serve to route commands (or make requests) to one or more appropriate database adaptors of specific measurement data sources (e.g., databases). The asset property interface 110 may serve to route commands (or make requests) to the appropriate database adaptors of the data source for a specific asset's properties. The network topology interface 112 may serve to route commands (or make requests) to the appropriate database adaptors for accessing data from a specific network topology data source. The interface server may have access to a map stored in memory (also may be called a dictionary), which is a database that allows the server 114 to determine which database adaptors to use to access what data. This map may be manually created or can be automated. Given the connectivity data requested, and the time date the interface will "know" which database adaptor 143 (or driver 132) from which to request the data.

Figure 2 depicts a specific embodiment of a UDIS 100 in more detail, including the databases 120 (raw utility data), data integration layer 107, client applications 116, and the data collection and storage modules 122. The data collection and storage elements 122 includes the devices, and in some cases manpower, used to obtain utility data from the field and save the raw collected measurement data within various databases. In addition, the properties of various assets associated with the measurement data may be identified, as may the network topology for locating an asset within the network, and stored via any suitable means. In some embodiments, applications 116 may be used to retrieve the data for use in the field by various utility system devices.

There are many types of measurement data that may be obtained. In one example, a utility company may have an non-operational database system 102a, a measurement database system 102b, a collector database system 102c, an eDNA database system 102d, a PII database system 102e, and a view database system 102f. The non-operational database system that contains non-operational data collected at substations and by a power line communications system (e.g., from measurement devices at transformers). The measurement database 102b stores measurement data of power parameters (e.g., voltage, current, power, etc.). The collector database system 102c stores metering data collected from the utility meters collected, for example, via a PLCS. eDNA and the PII databases are SCADA historians that store simple SCADA data (time/date, value and node number). The view database system 102f stores network information. Asset property data may include a GIS database system 104a (e.g. storing location information for assets) and asset database system 104b. Network topology data may be stored in a DMS database system 106a and/or a SCADA database system 106b. Each of these databases will have an adaptor 143 for accessing the stored data.

In some embodiments the network topology database 106a-b may be maintained by a third party application i.e. DMS, SCADA, GIS, or an Asset Management System.

At the data integration layer 107 are various adapters formed of a APIs 142a-f, 144a-b, and 146a-b and driver codes 132a-j (having specific knowledge of the associated database). In this example embodiment at least one adaptor exists for each database system to be accessed. Thus, as shown in Figure 2, a given API 142a may generate a request for a corresponding driver 132a to a corresponding database system 102a. The APIs 142 of the adaptors support the common interface required by the data integration interface server 114 The drivers 132 have the detailed knowledge of the underlying database structure to make data requests.

The data integration layer 107 also includes various interfaces 108-112. The measurement data interface 108 handles requests to the measurements databases 102a-f. The asset property interface 110 handles requests to the measurements asset property 104a-b. The network connectivity interface 112 handles requests for the network topology databases 106a-b. In particular each of the interfaces 108-112 distributes a request to one or more appropriate adaptors 143. The data integration interface server 114 receives requests from all client applications 116 and determines which data requests to generate and where to transmit such requests (e.g., the measurement data interface 108, asset property interface 110 and/or network topology interface 112). In this example embodiment, each of the Data Integration Interface Server 114, the measurement data interface 108, the asset property interface 110 and the network topology interface 112 may be formed of one or more computer systems and associated program code and also be physically remote from each other or co-located. Before routing the request through, the DIIS114 of the data integration layer 107, using its map (or dictionary), will convert the UUID that the application provided with the data request into the correct Node ID for the adaptor 143 that the DIIS 114 has determined the best adaptor 143 to service the request.

The client applications 116 include applications which may generate requests for utility data (and requests to invoke an application on the remote IT system such as, for example, to receive data derived from utility data) that is accessible through the UDIS 100a. These applications may include utility IT system applications 116a and third party applications 116b. In an example embodiment a utility may implement a plurality of smart grid applications 116c. Such applications may include a run time threshold monitor 144, an HMI (Human Machine Interface) application 146, a charting application 148, analysis modules 150, and reports/notification applications 152. The run time threshold monitor 144 may include one or more applications for processing utility measurement data to determine whether utility measurement data meets (including exceeds) one or more thresholds (e.g., low voltage too low, low voltage too high, etc.). Such applications may be implemented for a given asset, a set of assets, a given utility company, or multiple utility companies. The HMI application(s) 146 process utility data HMI or Human Machine Interface is the nomenclature often used by the utility for their GUI (graphical users interface). The HMI is used to show the status of the system in terms of its physical layout as a geospatial or one-line presentation as well as the interfaces to view data in various ways (charting and graphing and analytical reports) as well as administration interfaces. The charting applications 148 provide various display views of historical and maintenance data, and may include tabular displays and charting of such data. Analysis applications 150 may be implemented for evaluating performance, maintenance needs and/or other functions desirable for operating and maintaining utility company operations. For example, the analysis applications may process utility data to detect power outages (e.g., the location and time of a power outage), power restoration, overloaded distributed transformers, under loaded distributed transformers, power factor values, power harmonic values, etc. Various reports and messages or other notifications may be generated by application 152 in response to analyses performed by the analysis module.

In some instances the utility may not have any data or complete data for the network topology. In this situation, one or more applications 162 may be used to complete the connectivity network model of the topology. The application 162 may use any data available through the UDIS 100 to build and maintain the network topology model. In addition, the application 162 may be used to update the topology model..

In some embodiments there may be additional data and client applications for maintaining the UDIS 100a in a database 160. The application 162 may read and write to the database 160 to control the storage of network topology (i.e., connectivity of nodes). In addition, some client applications may have privilege to access and alter the data. Accordingly, the database 160 may have an associated database adaptor 143 (comprising an application interface 166 and driver 164). A client application 116 may make a request to change the data by issuing one or more commands to the data integration interface 114. The command(s) may be directed to the network topology interface 112, which in turn generates a request for the driver 164 to access the database 160 via the API 166.

Following are details on implementing the interfaces 108-114 of the data integration layer 107 for an example embodiment.

### Data Integration Interface Server 114

The primary function of the Data Integration Interface Server (DIIS) 114 is to present a single uniform interface to data consumers (applications), and route requests for data to the correct adaptor 143 having the correct driver 132. The DIIS may interact with three types of data: measurement data; asset property data; and network topology data (node connectivity).

One of the complex functions of the DIIS is to route a request for data to the correct interface adaptor 143. A request to the DIIS may contain a Universally Unique Identifier (UUID), a Date Time range, and Measurement Category. Examples of some measurement categories include power measurement data (such as volts, amps, watts, vars, VA, PF), fault data (such as waveforms and min/max values), asset measurement data (such as temperatures, dissolved gasses and fan motor current), and digital status data (such as the position (open or closed) of circuit switches and breakers). To accomplish this, the DIIS maintains a map stored in memory. The map includes a UUID for every node (asset) along with information identifying the interface adaptor supporting the node. The map may be automatically updated. The interface specification describes the functions/data/parameters supported by the UDIS. When a new adaptor is created, it knows what functions/data/parameters it supports, referenced by what range of nodes (UUIDs) and for what time/date range. A "discovery" application uses the data known to the adaptor to update the map of the DIIS 114.

### Measurement Data Interface 108

The Measurement Data Interface is the interface receiving commands when data consumers they want either single value or waveform data associated with a node. For example, the data consumer wants all the KW values for a given node between July 4^{th} 2007 00:00:00 and July 5^{th} 2007 00:00:00. The data consumer does not need to have knowledge about how the data is stored, where it is stored, or whether it is in an SQL database or a proprietary system like eDNA or PII. In one example embodiment, the implemented interface always returns the data the same way from every adaptor. This interface 108 may have two distinct parts - one for single measured values like RMS Volts, and another for waveform (e.g., oscillography) data. Each of these two may include both simple and complex interfaces. A "simple interface" is an interface in which the data is unprocessed. A complex interface will process the data. A simple example is where the adaptor may be able to support a request for fifteen minute bucketed energy data even though the energy data in the database may not be stored in fifteen minute intervals. A simple interface may support only the presentation of waveforms but a complex interface may support computing the rms value of each cycle of that waveform.

### Node Property Interface 110

The Asset Property Interface 110 receives commands when data consumers request specific information about a node (also referred to herein as an "asset"). For example the equipment serial number is a property as is the ability to measure dissolved gasses. Node properties can be arbitrarily complex. The interface 110 allows an associated adaptor 143 to return any number of properties in a way that can be understood by the data consumers regardless of each node's UUID or type of properties. Again the data consumer does not have to know the storage details. The interface 108 will support both a method to return all properties and a request for a specific property.

### Network Topology Interface 112

To perform useful analysis an application will often need to know how a specific node is electrically connected to the rest of the power grid. This interface supports requests to retrieve this connectivity information. For example, a data consumer that has been notified that a data measurement of a node has fallen outside a specific range can pass that node (its UUID) to the network topology interface 112 and request the identity of a parent node, child nodes, sibling nodes, and/or associated nodes, which in turn may be used to request their associated property and measurement data. The Network Topology interface 112 must have sufficient properties and functions so that a data consumer can traverse the returned informational tree in a normalized manner to aid in analysis applications. For example, a "voltage control" application may need network connectivity information. The control of voltage is done at the substation by changing the taps on a secondary of the transformer. One important requirement of the application is to not reduce the voltage supplied by the substation below a voltage where the voltage at the customer premises drops below an acceptable threshold level. Therefore, the voltage control application needs to know voltages of all of the circuits, transformers and, in some instances, the actual customer premises downstream of the substation. Thus, the application can request the identity of downstream nodes and then request measurement data from them. It is worth noting that connectivity is not a static function and the real time network connectivity changes based upon switch and breaker positions.

The figures include three interface blocks labeled Network topology Interface 112, Asset Property Interface 110, and Measurement Data Interface 108 that are shown as separate blocks. These may be considered part of the DIIS 114, specifically the back end of the DIIS and configured to communicate with their respective adaptors 143.

The adaptors 143 have two primary functional sections. The "Back End" or driver 132 is designed to make use of detailed intimate knowledge of the database or other storage mechanism used. Thus, it is designed (or has an understanding of) the physical schema, any stored procedures, and any other methods available to write, read and save data. The "Front End" or APIs 142 implements an interface to receive commands, process data, and provide data to the Data Integration Interface Server 114 (or interface 108-112).

In one example embodiment, the client applications provide data requests that include a UUID to the DIIS, which routes requests to the proper database adaptor 143. Prior to the routing, the DIIS converts the UUID in the request to the node ID known in the database to be accessed. The same node (physical node such as a transformer) may be present in multiple databases managed by different adaptors. So a given physical node that will have a UUID, there may be measurement and property data in multiple databases where each database has its own identifier for that physical node. The driver 132 of the adaptor 143 will have intimate knowledge of the database for which it is responsible and will only understand the local IDs of nodes in its own database. Only the data service interface server 114 communicates with the database adaptor. All database adaptors support a minimum subset of an overall database API. The adaptors 143 register themselves with the data service interface. During registration the API 142 of the adaptor 143 will give the data service interface server 114 (a) a list of its own local IDs; (b) If applicable, a start and end date and time for data available for each node; and (c) the data service interface server 114 will assign a unique identifier for the database adaptor 143. Accordingly, the data of a database may contain a start and end date. An array of measurement categories may be included for the case where different databases have the same node differentiated only by measurement categories. The system may also use a numeric Node ID and a string identifier (a node name) to identify each asset which should satisfy any individual database's requirement.

All data consumers may use the UUID to request node data. The DIIS 114 may perform the lookup, then using the date range and measurement category, route the request to the appropriate adaptor 143.

### Utility Data Integration Method

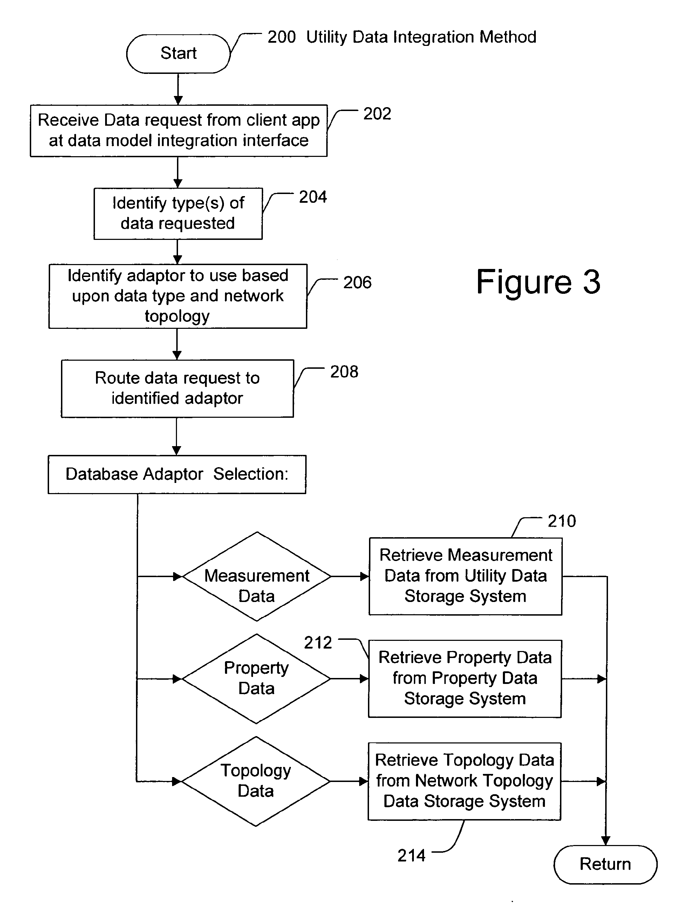

Figure 3 shows a specific embodiment of a utility data integration method 200 according to the present invention, in which data may be served from among a plurality of utility-data physical databases (e.g., databases 102, 104, 106) to various client utility-analysis software applications 116. At step 202 a data request is received at a data integration interface server 144 from a client utility-analysis software application 116. At step 204, the type of data to be accessed is determined such as determining whether the data request seeks one or more of multiple types of data, including utility measurement data, utility network node property data, and utility network node topology data. At step 206, one or more adaptors 143 (formed of 132 and 142) are identified for accessing the retrieving data based upon the data range request by accessing a UUID to Adaptor and node ID map (stored in memory). In another embodiment, the adaptor 143 is identified based on a UUID in the request, thus, in some embodiments, step 204 may be omitted. At step 208, the data request is routed to the each one of the one or more identified adaptors 143. At step 210, for a data request encompassing measurement data, a first storage system is accessed to retrieve utility transmission and distribution measurement data using a first adaptor 143 coupled to the database. At step 212, for a data request encompassing utility node property data, a second storage system may be accessed to retrieve utility network node property data using a second adaptor coupled to the database. At step 214, for a data request encompassing utility node topology data, a third storage system is accessed to retrieve connectivity data using a third adaptor 143 coupled to the database. Accordingly, utility is retrieved or accessed by the client application 115.

An example of an application using the data service interface is the following::
1. An application starts out with a UUID of a transformer and seeks to obtain dissolved gas data for the transformer. Using the UUID the application calls the DIIS requesting all the measurement points owned by the transformer associated with the UUID.
2. The DIIS uses its maintained map to determine which database adaptor (or driver) to use and what is the local database node ID.
3. The DIIS then calls the identified adaptor (or driver) asking for the data. In this example, it requests the data from a database adaptor 143 that is managing a node connectivity database.
4. The DIIS receives a response, which in this example comprises data in the form of an array of local node IDs (the measurement points owned by the transformer associated with the UUID).
5. The DIIS, using its map again, converts the local node IDs in the array to UUID(s) and sends the results back to the application that made the request.
6. The application processes the array and finds a measurement point that contains dissolved gas measurement data.
7. The application calls the DIIS again using the UUID of the measurement point and, this time, a date range of required data for that measurement point.
8. The DIIS, again using its map, then calls the database adaptor 143 (or driver 132) requesting the data.
9. The application now has enough information to run a diagnostic. After running the diagnostic, the application determines it needs some specific properties for this transformer, such as the date of purchase and load rating.
10. Using the UUID, the application calls the DIIS asking for all the asset properties of the transformer.
11. The DIIS uses it maintained map to find the database adaptor (or driver) to use and the local database node ID.
12. The DIIS then calls the database adaptor (or driver) asking for the data (in this example, it is a database adaptor that is managing an asset property database).
13. The database adaptor (or driver) returns an array of properties back to the DIIS.
14. The DIIS returns the array back to the calling application.

It is worth noting that some embodiments may omit certain functionality and/or components. For example, in alternate embodiments the APIs 142 may not be implemented in which case the DIIS 114 may communicate directly with the drivers 132. It is to be understood that the components described herein including the DIIS 114, drivers 132, APIs 142, interfaces 108-112, and other components may each be formed of one or more computer systems (each comprising a plurality of computers, some of which may not be co-located with other computers of the computer system (i.e., a distributed computer system)) and program code stored in one or more tangible mediums that is executable to provide the described functionality. In addition, some program code and/or computer systems may be used to provide the functionality of multiple components.

It is to be understood that the foregoing illustrative embodiments have been provided merely for the purpose of explanation and are in no way to be construed as limiting of the invention. Words used herein are words of description and illustration, rather than words of limitation. In addition, the advantages and objectives described herein may not be realized by each and every embodiment practicing the present invention. Further, although the invention has been described herein with reference to particular structure, materials and/or embodiments, the invention is not intended to be limited to the particulars disclosed herein. Rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention.

## Claims

1. A method of using a computer system to provide access to a plurality of physical databases that store utility data to a plurality of software applications and wherein the utility data is collected via a plurality of nodes, comprising:
receiving a data request that includes a universal node identifier identifying a node from a software application;
maintaining a node map in a memory that includes data mapping a plurality of universal node identifiers to a plurality of local node identifiers used by the plurality of databases;
accessing the node map to determine a local node identifier associated with the universal node identifier of the data request;
selecting one or more database adaptors for retrieving data for the data request based on data in the node map;
providing a data access request that includes the determined local node identifier to the one or more database adaptors;
receiving data from the one or more adaptors in response to the data access request; and
based on the received data, providing a response to the data request to the software application.

2. The method according to claim 1, wherein the plurality of physically separate databases collectively store:
measurement data derived from measurements of a plurality of parameters of a power grid and supplied via a plurality of network nodes;
property data comprising data of each of the plurality of network nodes; and
connectivity data comprising data of the connectivity of the plurality of network nodes;

3. The method according to claim 1 or claim 2, further comprising dynamically updating the node map upon receiving update data from an adaptor.

4. The method according to any one of the preceding claims, wherein each adaptor comprises a driver comprising program code for accessing at least one of the plurality of databases.

5. The method according to any one of the preceding claims, wherein at least some adaptors further comprise an application programming interface program code segment configured to communicate with the driver of the adaptor.

6. The method according to any one of the preceding claims, further comprising storing one or more rules for controlling access to data of the plurality of databases.

7. A computer system for providing data from a plurality of physical databases to a plurality of software applications, comprising:
a first set of adaptors, each configured to access one or more of a plurality of measurement databases that store measurement data supplied via a plurality of network nodes and derived from measurements of a plurality of parameters of a power grid;
a second set of adaptors, each configured to access one or more databases that store node property data comprising data of the plurality of network nodes;
a third set of adaptors configured to access one or more connectivity databases that store connectivity data comprising data of the connectivity of the plurality of network nodes;
a node map stored in a memory map that includes data sufficient for associating each of the plurality of nodes with at least one of the plurality of separate databases; and
a data interface server responsive to requests from the plurality of software applications and configured to identify one or more adaptors of the first set of adaptors, second set of adaptors, or third set of adaptors, to provide data requests based information in the node map.

8. The system according to claim 7, wherein said data interface server is configured to dynamically update the node map upon receiving update data from an adaptor.

9. The system according to claim 7 or claim 8, wherein the first set of adaptors comprise a plurality of adaptors; and
wherein the measurement databases includes voltage data.

10. The system according to any one of claims 7 to 9, wherein each adaptor of the first set of adaptors comprises a driver comprising program code for accessing at least one of the plurality of measurement databases.

11. The system according to claim 10, wherein at least some adaptors of the first set of adaptors further comprise application programming interface program code configured to communicate with a driver of the adaptor.

12. The system according to any one of claims 7 to 11, wherein said data interface server is configured to store one or more rules for controlling access to data of the plurality of databases.

13. The system according to claim 12 or the method according to claim 6, wherein at least one of the stored rules restricts access to data based on the requesting application.

14. The system according to claim 12 or the method according to claim 6, wherein at least one of the stored rules restricts access to data based on an identity of the requesting entity.

15. The system according to claim 12 or the method according to claim 6, wherein at least one of the stored rules restricts access to data based on the type of data to be accessed.
